# EUROPÄISCHE PATENTSCHRIFT

(11) **EP 2 226 486 B1**
(45) Veröffentlichungstag und Bekanntmachung des Hinweises auf die Patenterteilung: **29.06.2011**
(21) Anmeldenummer: 09011065.1
(22) Anmeldetag: 28.08.2009
(51) Int. Cl.: F02K 1/36, B64D 33/10

(54) **Verfahren zur Herstellung eines Ejektor-Düsen-Rohrs**
Method for manufacturing an ejector nozzle tube
Procédé de fabrication d'un tuyau de buse d'éjecteur

(30) Priorität: 03.03.2009 DE 102009011452
(43) Veröffentlichungstag der Anmeldung: 08.09.2010
(73) Patentinhaber: Rolls-Royce Deutschland Ltd & Co KG, 15827 Blankenfelde-Mahlow (DE)
(72) Erfinder: Todorovic, Predrag, 10437 Berlin (DE)
(74) Vertreter: Weber, Joachim

(56) Entgegenhaltungen:
- EP-A2- 1 944 475
- FR-A5- 2 087 076
- GB-A- 1 512 785
- US-A1- 2003 154 720
- US-A1- 2005 268 593

## Beschreibung

Die Erfindung bezieht sich auf ein Verfahren zur Herstellung eines Ejektor-Düsen-Rohrs.

Ejektor-Düsen-Rohre werden gemäß dem Stand der Technik verwendet, um ein zweites Fluid in eine erste Fluidströmung einzubringen, beispielsweise, um diese zu beschleunigen. Hierbei erstreckt sich üblicherweise das Ejektor-Düsen-Rohr quer zur Strömungsrichtung innerhalb eines Strömungskanals und weist an der Abströmseite Öffnungen auf, aus welchen die zweite Fluidströmung ausströmen kann.

Das Ejektor-Düsen-Rohr wird üblicherweise von einer Seite aus gespeist, so dass sich die Strömung des zweiten Fluids innerhalb des Ejektor-Düsen-Rohrs in dessen Längsrichtung erstreckt. Dies bedeutet, dass die einzelnen Austrittsöffnungen oder Austrittsdüsen unterschiedlich mit dem zweiten Fluid beaufschlagt werden und in ihnen ein unterschiedlicher Fluiddruck herrscht. Hieraus ergeben sich erhebliche Nachteile, da die Einbringung des zweiten Fluids über die Länge des Ejektor-Düsen-Rohrs ungleichmäßig ist und sich somit in der ersten Fluidströmung nicht über deren gesamten Querschnitt die gewünschten Effekte ergeben.

Die GB 1 512 785 A beschreibt einen Ejektor, bei welchem ein einen Querschnittskanal bildender Grundkörper mit einem plattenförmigen Bauteil verbunden ist, durch welches eine Austrittsöffnung definiert wird.

Die WO 2009/054732 A1 beschreibt einen weiteren Ejektor, welcher ebenfalls als massives, aufwendig herzustellendes Bauteil gefertigt ist.

Der Erfindung liegt die Aufgabe zugrunde, ein Verfahren zur Herstellung eines Ejektor-Düsen-Rohrs zu schaffen, welches bei einfachem Aufbau und einfacher, kostengünstiger Anwendbarkeit die Nachteile des Standes der Technik vermeidet und eine Strömungsoptimierung ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass das Ejektor-Düsen-Rohr aus einem rechteckigen, blechförmigen oder plattenförmigen Rohling hergestellt wird. Dieser wird an zwei einander gegenüberliegenden Seitenbereichen oder Kantenbereichen geprägt, so dass sich eine wellenförmige Struktur ergibt. Nachfolgend wird der Rohling um seinen mittleren Bereich gebogen oder gefaltet. Dabei ergibt sich ein Durchströmungsquerschnitt, welcher rohrartig ist und zur Einleitung des Fluids dient. Die beiden wellenförmig geprägten oder umgeformten Randbereiche oder Kantenbereiche werden dabei übereinandergelegt. Durch Interferenzen oder Verschiebungen der wellenförmigen Struktur ergeben sich Bereiche, welche Ejektor-Düsen ausbilden, da die beiden Kantenbereiche nicht ganz passgenau aufeinanderliegen. Zwischen den Ejektor-Düsen werden die Kantenbereiche punktförmig verbunden, beispielsweise durch Punktschweißen.

In einer besonders günstigen Ausgestaltung der Erfindung ist vorgesehen, dass der mittlere Biegebereich einen teilkreisförmigen Querschnitt aufweist. Im Querschnitt kann somit das erfindungsgemäße Ejektor-Düsen-Rohr einen strömungsoptimierten, tropfenförmigen Querschnitt haben, der im Bereich der aufeinanderliegenden Kanten, an welchen die Ejektor-Düsen ausgebildet werden, flach ist und an der Anströmseite einen teilkreisförmigen Querschnitt aufweist. Hierdurch ergibt sich eine Strömungsoptimierung der oben beschriebenen ersten Fluidströmung. Diese wird durch das erfindungsgemäße Ejektor-Düsen-Rohr nur unwesentlich gestört. Es ergeben sich somit keine unerwünschten Verwirbelungen oder Strömungswiderstände, vielmehr ist in weiten Bereich längs der Oberfläche des erfindungsgemäßen Ejektor-Düsen-Rohrs eine laminare Strömung möglich.

Besonders günstig kann es erfindungsgemäß sein, wenn die wellenförmigen Kantenbereiche mit zueinander unterschiedlicher Geometrie umgeformt werden. Hierdurch ist es möglich, die einzelnen Ejektor-Düsen gezielt auszubilden, welche sich durch das Übereinanderlegen der beiden Kantenbereiche ausformen. Hierbei kann es auch möglich sein, alternierend einzelne Ejektor-Düsen hinsichtlich der Strahlaustrittsrichtung zu variieren, so dass alternierend die Düsen nach oben oder nach unten gerichtet sein können.

Die Kantenbereiche können erfindungsgemäß entweder gradlinig oder strukturiert ausgebildet sein. So ist es möglich, im Bereich der Kantenbereiche ebenfalls eine Wellenform oder ähnliches vorzusehen, so dass die einzelnen Ejektor-Düsen zueinander vorspringend oder zurückversetzt angeordnet werden können, wenn die beiden Kantenbereiche aufeinanderliegen. Somit kann es günstig sein, zueinander versetzte Reihe von Ejektor-Düsen auszubilden.

Erfindungsgemäß wird das erfindungsgemäße Ejektor-Düsen-Rohr bevorzugt in einem Strömungskanal eines Wärmetauschers verwendet, um durch Einleitung des zweiten Fluids in das Ejektor-Düsen-Rohr die Strömung des ersten Fluids durch den Strömungskanal des Wärmetauschers zu beschleunigen, wenn keine ausreichende Strömungsgeschwindigkeit in dem Strömungskanal vorliegt.

Im Folgenden wird die Erfindung anhand eines Ausführungsbeispiels in Verbindung mit der Zeichnung beschrieben. Dabei zeigt:
- Fig. 1: eine perspektivische vereinfachte Darstellung des Herstellungsvorgangs,

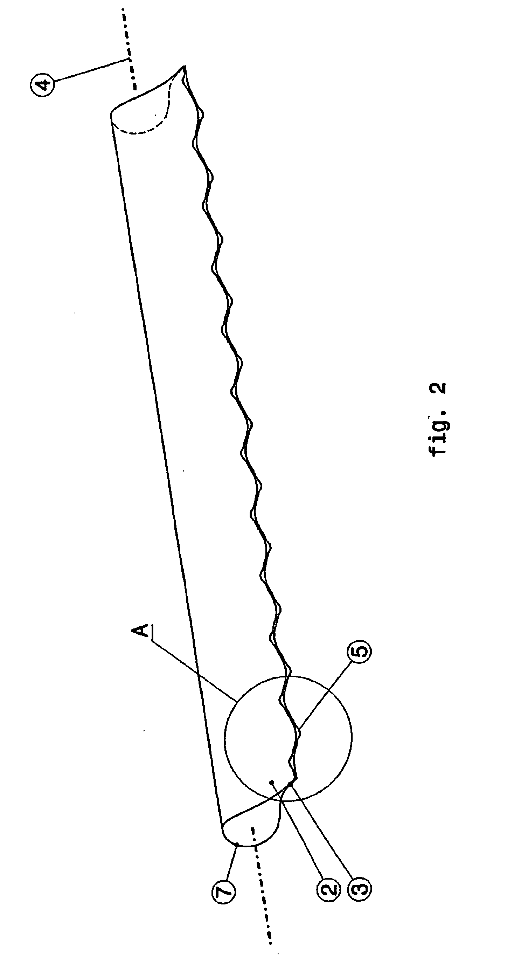

- Fig. 2: eine perspektivische Darstellung, analog Fig. 1, des fertiggestellten Ejektor-Düsen-Rohrs,
- Fig. 3: eine Detailansicht des Details A von Fig. 2,
- Fig. 4: eine Draufsicht auf den Randbereich gemäß den Fig. 1 und 2,
- Fig. 5-7: Schnittansichten längs der Linien B-B (Fig. 5), C-C (Fig. 6) und D-D (Fig. 7).

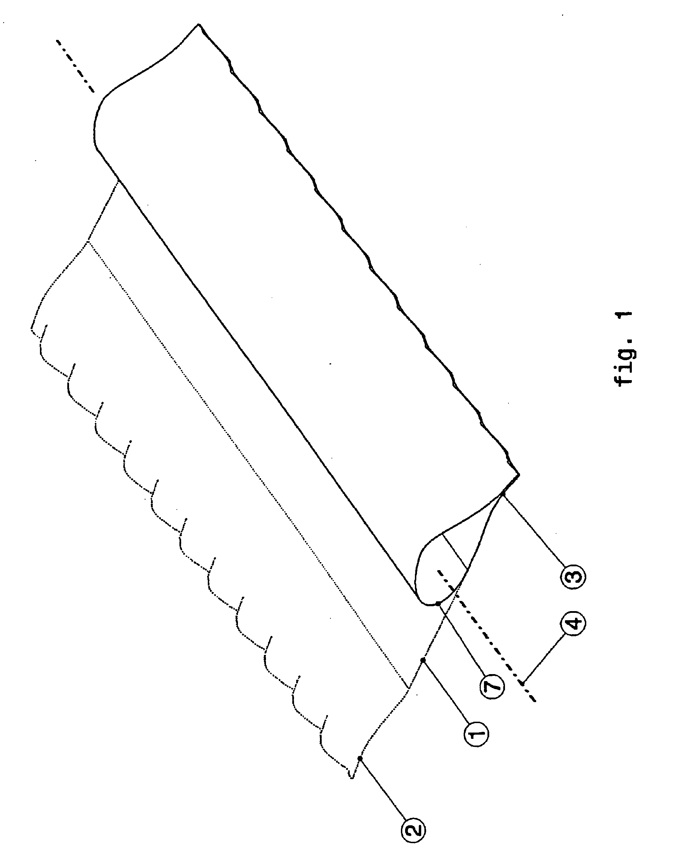

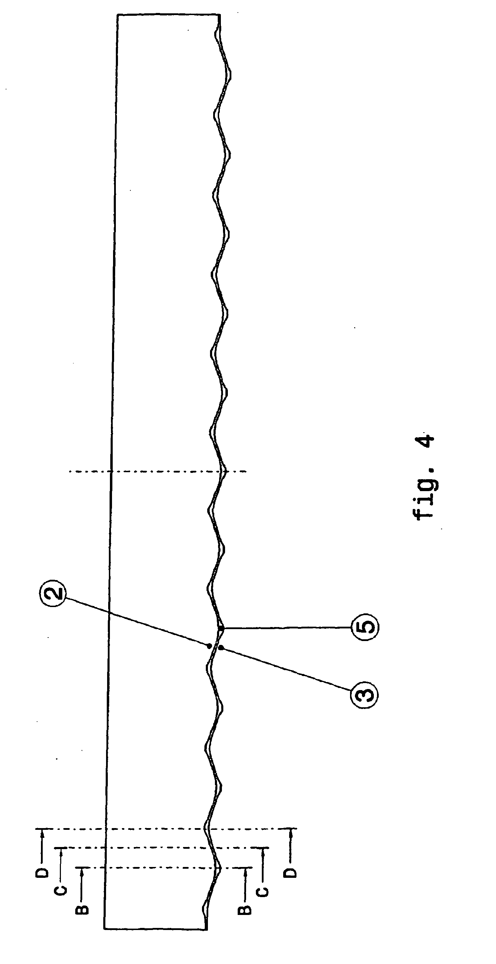

Das erfindungsgemäße Ejektor-Düsen-Rohr wird aus einem im Wesentlichen rechteckigen, blechartigen oder plattenförmigen Rohling 1 gefertigt. Dieser weist einander gegenüberliegende Kantenbereiche 2, 3 auf. Diese werden zunächst mit einer wellenförmigen Prägung versehen. Die Kantenbereiche können entweder geradlinig oder, wie in Fig. 4 dargestellt, wellenförmig ausgebildet sein. Bevorzugt ist die wellenförmige Prägung oder Umformung, welche in Fig. 1 gezeigt ist, so gewählt, dass sich in Längsrichtung des Ejektor-Düsen-Rohrs einzelne Wellenberge oder Wellentäler ergeben, wobei die beiden Kantenbereiche 2, 3 nicht exakt zueinander passend dimensioniert oder ausgebildet sind.

In einem weiteren Arbeitsschritt wird dann der Rohling 1 in seinem mittleren Bereich umgebogen oder umgefaltet, so dass sich der in den Figuren gezeigte teilkreisförmige Querschnitt um eine Achse 4 ergibt, die zumindest für den Anströmbereich des Ejektor-Düsen-Rohrs die Lage einer Mittelachse einnimmt.

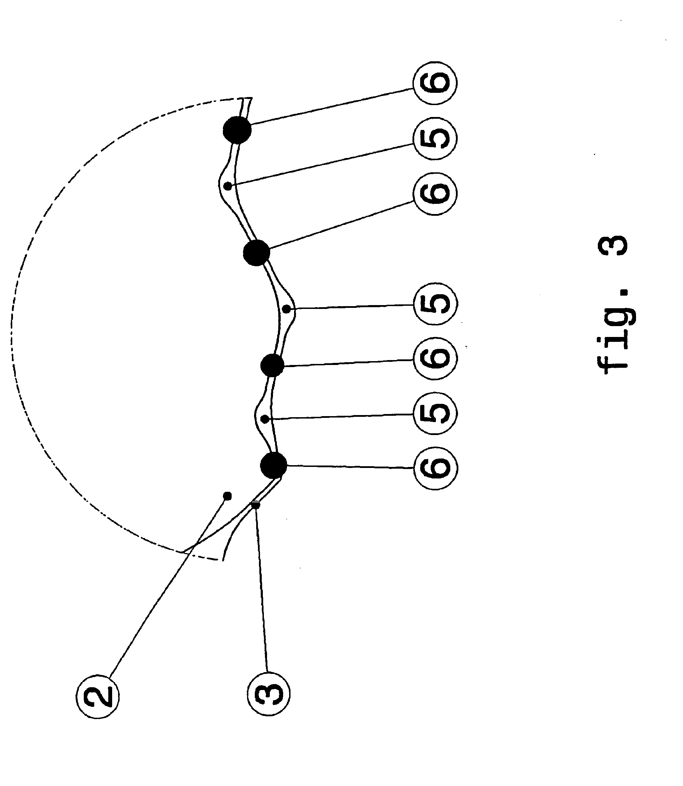

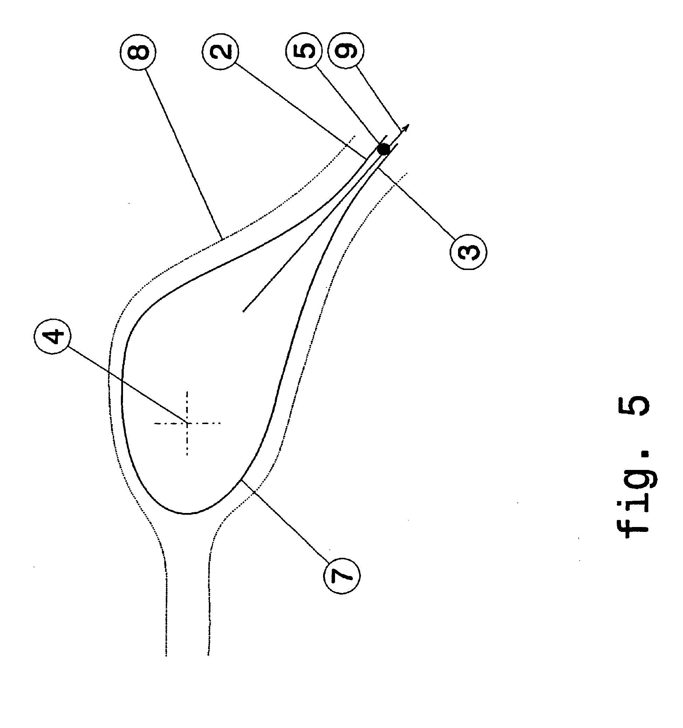

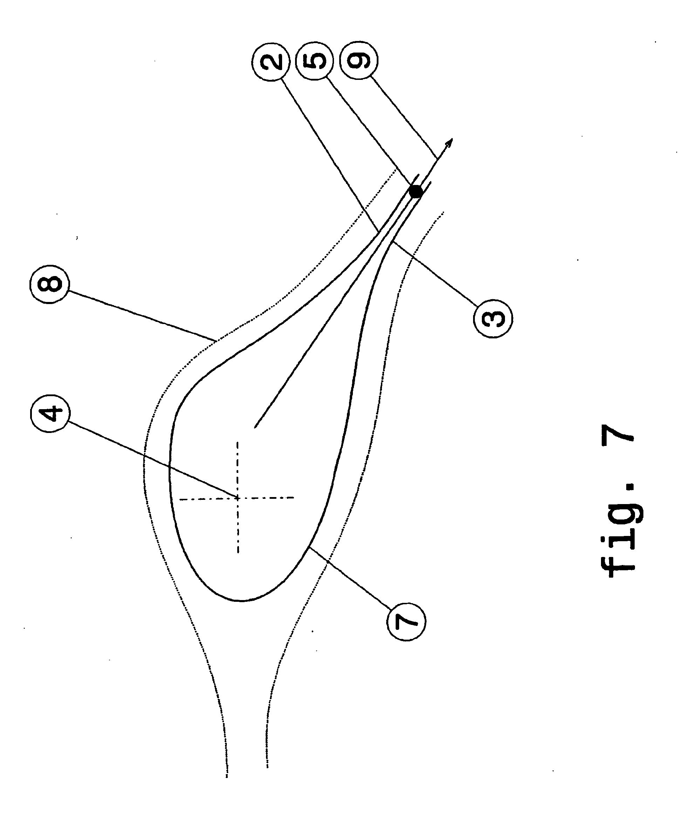

Durch die Übereinanderlegung der beiden Kantenbereiche 2, 3 und deren wellenförmige Strukturierung ergeben sich Bereiche, in denen die beiden Kantenbereiche aufeinanderliegen. Diese Bereiche werden durch Punktverbindungen 6 (beispielsweise Punktschweißverbindungen) miteinander verbunden. Zwischen den Punktverbindungen 6 ergeben sich Bereiche, in denen die beiden Kantenbereiche 2, 3 nicht exakt aufeinanderliegen, sondern einen Abstand zueinander haben. Hierdurch werden Ejektor-Düsen 5 ausgebildet (siehe beispielsweise Fig. 3). Durch diese Ejektor-Düsen 5 kann die in den Innenraum des Ejektor-Düsen-Rohrs eingeleitete Strömung austreten, so wie dies in den Fig. 5 und 7 dargestellt ist (Sekundärströmung 9). Durch die Strukturierung ist es möglich, die Austrittsrichtung der einzelnen Ejektor-Düsen 5 zu variieren, so dass beispielsweise alternierend die Ejektor-Düsen 5 etwas nach oben bzw. nach unten gerichtet sind. Weiterhin ist es möglich, den Austrittsquerschnitt der Ejektor-Düsen in seinem Abstand von der Achse 4 zu variieren, so wie sich dies aus Fig. 4 ergibt. Einzelne der Düsen stehen somit weiter vor als andere, etwas rückversetzte Ejektor-Düsen 5.

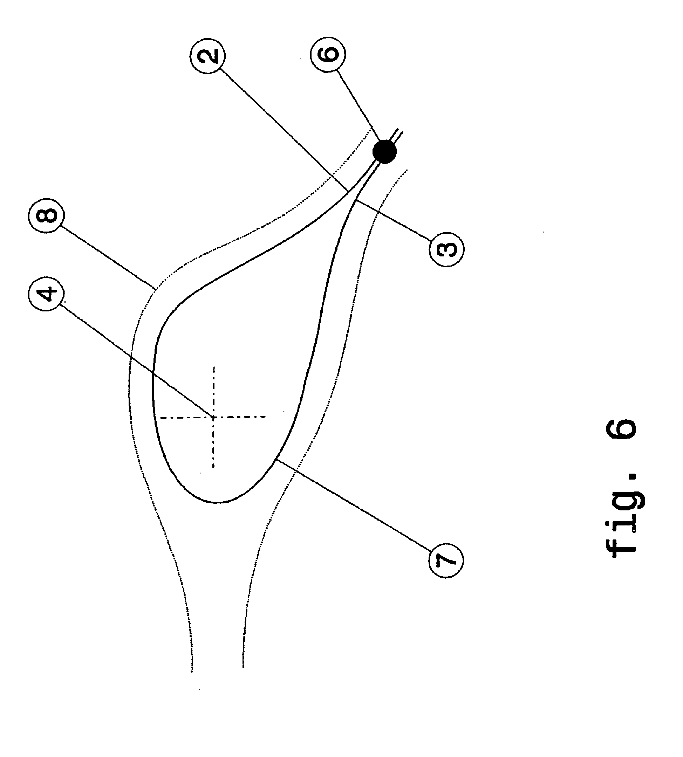

Die Fig. 5-7 zeigen mit dem Bezugszeichen 8 die Hauptströmung, welche das Ejektor-Düsen-Rohr umströmt. Durch den strömungsgünstigen Aufbau ergibt sich ein optimierter Strömungsverlauf der Hauptströmung 8.

Das erfindungsgemäße Ejektor-Düsen-Rohr ist bei Ölkühlern von Luftfahrzeugen verwendbar. Derartige Ölkühler werden durch die Anströmende Luft gekühlt. Wenn sich das Luftfahrzeug in einer Phase geringer Eigengeschwindigkeit befindet, beispielsweise beim Rollen oder in der ersten Startphase, strömt nicht ausreichend viel Luft durch den Ölkühler. Somit ergibt sich nur ein geringer Ölkühleffekt. In dem Strömungskanal des Ölkühlers ist es deswegen besonders vorteilhaft, das erfindungsgemäße Ejektor-Düsen-Rohr anzuordnen. Durch die Einbringung einer Sekundärströmung kann die Hauptströmung entsprechend beschleunigt werden, so dass sich trotz der geringen Anströmgeschwindigkeit durch die zusätzlich durch die Sekundärströmung angesaugte Luft eine ausreichende Kühlwirkung ergibt.

Die Beschleunigungswirkung durch die aus den Ejektor-Düsen austretende Strömung ergibt sich durch die Reibung mit den Partikeln der Hauptströmung. Da die Ausströmgeschwindigkeit aus den Ejektor-Düsen weitaus größer ist als die Geschwindigkeit der Hauptströmung, werden die Partikel der Hauptströmung mitgerissen und damit beschleunigt. Dies führt zu einem Ansaugeffekt, welcher die gesamte Hauptströmung beschleunigt.

Bei dem erfindungsgemäßen Ejektor-Düsen-Rohr wird der beschriebene Effekt durch einen sehr einfachen Aufbau erreicht, der mit einfachsten Mitteln kostengünstig herstellbar ist. Es ist lediglich erforderlich, einen Rohling zu prägen, zu falten und durch einzelne Schweißpunkte zu verbinden. Diese Vorgänge sind mit minimalem Fertigungsaufinrand realisierbar.

Durch die erfindungsgemäß vorgesehene Querschnittsform, welche ein tragflügelartiges Profil hat (airfoil) ergibt sich eine besondere Strömungsoptimierung. Durch die Ausgestaltung des Kantenbereichs und die damit ausgebildeten Ejektor-Düsen ergibt sich eine Steigerung des Wirkungsgrades verglichen mit rohrförmigen Ejektor-Düsen-Rohren gemäß dem Stand der Technik. Diese Steigerung ist insbesondere deshalb möglich, weil die Hauptströmung 8 (siehe Fig. 5 und 7) in direktem Kontakt und im Wesentlichen parallel zu der aus den Ejektor-Düsen 5 austretenden Sekundärströmung 9 verläuft.

Zusätzlich zu der vereinfachten Herstellung (verglichen mit dem Stand der Technik), ergibt sich eine wesentliche Materialeinsparung, da ein einfaches Blech-Biege-Teil verwendet werden kann, anstelle einer aufwendigen Rohrkonstruktion mit angeschweißten Rohrstutzen. Durch die bereits beschriebene Steigerung des Wirkungsgrades von mehr als 70 % und durch die Möglichkeit, im Vergleich zum Stand der Technik mehr als 10 % größere Volumina an Sekundärströmung auszubringen, ergibt sich für einen Ölkühler der beschriebenen Art eine Steigerung des Wirkungsgrades von 80 % bis 90 %.

### Bezugszeichenliste

- 1: Rohling
- 2, 3: Kantenbereich
- 4: Achse
- 5: Ejektor-Düse
- 6: Punktverbindung
- 7: mittlerer Biegebereich
- 8: Hauptströmung
- 9: Sekundärströmung

## Patentansprüche

1. Verfahren zur Herstellung eines Ejektor-Düsen-Rohrs für einen Ölkühler eines Luftfahrzeugs, bei welchem ein im Wesentlichen rechteckiger, plattenförmiger Rohling (1) an zwei gegenüberliegenden Kantenbereichen (2, 3) wellenförmig umgeformt wird, nachfolgend um eine mittig und parallel zu den Kantenbereichen (2, 3) angeordnete Achse (4) gebogen wird, wobei die Kantenbereiche (2, 3) aufeinandergelegt werden und nachfolgend die Kantenbereiche (2, 3) unter Ausbildung von Ejektor-Düsen (5) punktförmig (6) verbunden werden.

2. Verfahren nach Anspruch 1, **dadurch gekennzeichnet, dass** der mittlere Biegebereich (7) mit einem teilkreisförmigen Querschnitt gebogen wird.

3. Verfahren nach Anspruch 1 oder 2, **dadurch gekennzeichnet, dass** die wellenförmigen Kantenbereiche (2, 3) mit zueinander unterschiedler Geometrie umgeformt werden.

4. Verfahren nach einem der Ansprüche 1 bis 3, **dadurch gekennzeichnet, dass** die Kantenbereiche (2, 3) zueinander parallel und aufeinander liegend angeordnet werden.

5. Verfahren nach einem der Ansprüche 1 bis 4, **dadurch gekennzeichnet, dass** die Kantenbereiche (2, 3) geradlinig ausgebildet werden.

6. Verfahren nach einem der Ansprüche 1 bis 4, **dadurch gekennzeichnet, dass** die Kantenbereiche (2, 3) strukturiert ausgebildet werden.

7. Verfahren nach einem der Ansprüche 1 bis 6, **dadurch gekennzeichnet, dass** die Ejektor-Düsen (5) in zueinander versetzten Reihen angeordnet werden.

8. Ejektor-Düsen-Rohr, hergestellt nach dem Verfahren eines der Ansprüche 1 bis 7.

9. Verwendung eines Ejektor-Düsen-Rohrs nach Anspruch 8 im Strömungskanal eines Wärmetauschers zur Einleitung einer eine Hauptströmung (8) durch den Strömungskanal beeinflussenden Sekundärströmung (9).

## Claims

1. Method for the manufacture of an ejector nozzle tube for an oil cooler of an aircraft, where an essentially rectangular plate-type blank (1) is ondulately formed on two opposite edge areas (2, 3), subsequently bent around an axis (4), which is centrically and parallelly arranged to the edge areas (2, 3), with the edge areas (2, 3) being superimposed and subsequently joined by point connections (6), providing for the formation of ejector nozzles (5).

2. Method in accordance with Claim 1, **characterized in that** the center bending area (7) is given a part-circular cross-section.

3. Method in accordance with Claim 1 or 2, **characterized in that** the ondulated edge areas (2, 3) are formed with different geometry relative to each other.

4. Method in accordance with one of the Claims 1 to 3, **characterized in that** the edge areas (2, 3) are arranged in superposition and parallel to each other.

5. Method in accordance with one of the Claims 1 to 4, **characterized in that** the edge areas (2, 3) are rectilinear.

6. Method in accordance with one of the Claims 1 to 4, **characterized in that** the edge areas (2, 3) are structured.

7. Method in accordance with one of the Claims 1 to 6, **characterized in that** the ejector nozzles (5) are arranged in rows which are offset relative to each other.

8. Ejector nozzle tube manufactured in accordance with the method of one of the Claims 1 to 7.

9. Application of an ejector nozzle tube in accordance with Claim 8 in the flow duct of a heat exchanger for the indroduction of a secondary flow (9) which influences a main flow (8) through the flow duct.

## Revendications

1. Procédé de fabrication d'un tube de buse d'éjecteur pour un radiateur d'huile d'un aéronef, dans lequel une pièce brute (1) pour l'essentiel rectangulaire et plane est formée de manière ondulée sur deux zones de bord (2, 3) opposées, puis pliée autour d'un axe (4) médian et parallèle aux zones de bord (2, 3), sachant que les zones de bord (2, 3) sont superposées et qu'ensuite, les zones de bord (2, 3) sont reliées ponctuellement (6) pour former des buses d'éjecteur (5).

2. Procédé selon la revendication n° 1, **caractérisé en ce que** la zone médiane de pliage (7) est pliée selon une section transversale en forme de cercle partiel.

3. Procédé selon la revendication n° 1 ou n° 2, **caractérisé en ce que** les zones de bord ondulées (2, 3) sont formées selon des géométries différentes les unes des autres.

4. Procédé selon une des revendications n° 1 à n° 3, **caractérisé en ce que** les zones de bord (2, 3) sont disposées parallèlement et les unes sur les autres.

5. Procédé selon une des revendications n° 1 à n° 4, **caractérisé en ce que** les zones de bord (2, 3) sont formées de manière rectiligne.

6. Procédé selon une des revendications n° 1 à n° 4, **caractérisé en ce que** les zones de bord (2, 3) sont formées de manière structurée.

7. Procédé selon une des revendications n° 1 à n° 6, **caractérisé en ce que** les buses d'éjecteur (5) sont disposées en rangées décalées les unes par rapport aux autres.

8. Tube de buse d'éjecteur fabriqué selon le procédé d'une des revendications n° 1 à n° 7.

9. Mise en oeuvre d'un tube de buse d'éjecteur selon la revendication n° 8 dans le canal d'écoulement d'un échangeur de chaleur, afin d'introduire un flux secondaire (9) influençant un flux principal (8) à travers le canal d'écoulement.
